# EUROPEAN PATENT APPLICATION

(11) **EP 4 474 050 A1**
(43) Date of publication of application: **11.12.2024**
(21) Application number: 24169268.0
(22) Date of filing: 09.04.2024
(51) Int. Cl.: B01J 23/89, C07C 213/00, C08G 65/00

(54) **REDUCTIVE AMINATION CATALYST FOR PREPARATION OF POLYETHER AMINE**

(30) Priority: 09.06.2023 CN 202310683447
(71) Applicant: Zhejiang Huangma Technology Co., Ltd., Shaoxing Zhejiang 312000 (CN); Zhejiang Lukean Chemical Co., Ltd., Shaoxing Zhejiang 312000 (CN); Zhejiang Huangma Chemical New Polymer Material Co., Ltd, Shaoxing Zhejiang 312000 (CN); Zhejiang Huangma Shangyi New Material Co., Ltd., Shaoxing Zhejiang 312000 (CN)
(72) Inventor: WANG, Weisong, Shaoxing, 312000 (CN); JIN, Yifeng, Shaoxing, 312000 (CN); SONG, Minggui, Shaoxing, 312000 (CN); YU, Jiang, Shaoxing, 312000 (CN); WANG, Majishi, Shaoxing, 312000 (CN)
(74) Representative: Zaboliene, Reda

(57) **Abstract**

Provided are a reductive amination catalyst for preparation of polyether amine and its preparation method. According to the reductive amination catalyst, a reductive amination reaction includes: enabling polyether polyols to undergo a hydroamination reaction in presence of the reductive amination catalyst to prepare polyether amine. The reductive amination catalyst includes an MgAl₂O₄ carrier, Ni, Pd and Cu active components loaded thereon. γ-Al₂O₃ modified by MgO is used as the carrier for the amination catalyst, and the modified MgAl₂O₄ carrier has characteristics of high temperature resistance, high mechanical strength and low surface acidity, which can better adapt to the high temperature and high pressure reaction conditions required for low-carbon alkane dehydrogenation. In presence of the catalyst, the temperature of a reaction system is low, and the activity or selectivity of the catalyst is suitable for oligomeric oxypropylene ether. The Raw materials and catalyst facilitate the preparation of low-color-value polyether amine.

## Description

### TECHNICAL FIELD

The present disclosure relates to the field of chemical industry, and in particular, to a reductive amination catalyst for preparation of polyether amine and its preparation method.

### BACKGROUND

Polyether polyol is an important polymer material commonly used in the preparation of polyurethane. The most commonly used catalyst in a catalytic reductive amination method is a supported metal catalyst, whose main functions are dehydrogenation and hydrogenation, which have a crucial impact on the entire amination reaction. The selection of a catalyst has a great influence on the conversion rate and selectivity of an amination reaction. For example, during a preparation process, the selection and modification of a carrier, the ratio of active components, roasting reduction activation conditions and other factors are all important aspects that affect the performance of the catalyst. The selection and modification of the carrier are currently the research focus of researchers in the art.

The components and catalytic effects of catalysts commonly used in the patent literature for the synthesis of polyether amines in recent years are listed in Table 1.

**Table 1 Components and catalytic effects of common catalysts**

| Patent Publication No. | Catalyst composition | Effect |
|---|---|---|
| CN106957420A | 5%-15% of Ni | Conversion rate>93 % |
| | 5%-10% of Co | |
| | 2%-10% of Re | |
| | 1%-5% of Mo | |
| | 1%-5% of La | |
| CN107001612A | 15%-80% of Al | Conversion rate>92.5% |
| | 1%-20% of Cu | |
| | 5%-35% of Ni | |
| | 5%-35% of Co | |
| | 0.2%-5% of Sn | |
| CN107141225A | 40%-60% of Ni | Conversion rate>91.5% |
| | 3%-8% of Cu | |
| | 0.5%-2% of Cr | Selectivity>93% |
| CN107754813A | 5%-10% of Ni | Conversion rate>93 % |
| | 3%-5% of Cu | |
| | 0.6%-0.7% of Pd | |
| | 0.2%-0.3% of Rh | |
| | 0.1%-0.3% of Zr/Mg | |
| CN107876098A | 1%-20% of Ni | Conversion |
| | 0.5%-10% of Cu/Cr/Mo/Zr/Fe | rate>91.5% |
| | | Selectivity>94% |
| CN107915836A | 80%-95% of Ni | Conversion rate>96% |
| | 4.5%-15% of Cu | Selectivity>95.5% |
| | 0.5%-5% of La | |
| | 10%-20% of Mg/Al | |
| CN108017782A | 80%-95% of Ni | |
| | 4.5%-15% of Cu | Conversion rate>95.5% |
| | 0.5%-5% of La | Selectivity>95% |
| CN108014821A | 1%-15% ofNiO | Conversion rate>93 % |
| | 0.01%-2% of Au₂O₃ | |
| | 0.01%-1% of SeO₂ | Selectivity>93.5% |

It can be seen from Table 1 that the main active components of the selected catalyst are common metals such as nickel, chromium, copper, cobalt, aluminum, and manganese, and the metal loading is relatively high. When noble metals such as lanthanum, molybdenum, ruthenium, rhenium, rubidium, and palladium are used as additives, the conversion rate and selectivity are relatively high. The carriers used in these patents include spherical alumina, amorphous silica, aluminosilicate, activated carbon, and the like; and there are also Raney catalysts without carriers. Catalysts prepared by using different combinations of metals and carriers vary in catalytic effects. Most of the above catalysts are γ-Al₂O₃ supported catalysts. However, when the Al2O3 carrier encounters water during an amination process, it is easy to undergo partial or complete crystal phase transformation, that is, rehydration, resulting in activity reduction or deactivation of the catalyst; and therefore, the catalyst will be low in durability and shorter in service life.

### SUMMARY

In view of the problems described in the Background, the object of the present disclosure is to provide a catalyst for amination in the preparation of polyurethane using polyether polyols, and a preparation method of the catalyst, so that the prepared catalyst has the advantages of strong water resistance, long-lasting catalytic activity, and the like. Moreover, the prepared polyether amine has the advantages of low color number (color number≤10) and good selectivity.

In order to solve the above problems, the technical solutions adopted by the present disclosure are as follows:

A reductive amination catalyst for preparation of polyether amine is provided. A reductive amination reaction includes: enabling polyether polyols to undergo a hydroamination reaction in presence of the reductive amination catalyst to prepare polyether amine. The reductive amination catalyst includes an MgAl₂O₄ carrier, and Ni, Pd and Cu active components loaded thereon.

The reductive amination catalyst is prepared from the following components by weight percent: 2-15wt% of Ni, 0.1-2wt% of Pd, 0.05-1wt% of Cu, and 84-95wt% of MgAl₂O₄.

More specifically, the reductive amination catalyst is prepared from the following components by weight percent: 5-10wt% of Ni, 0.5-1.5wt% of Pd, 0.1-0.5wt% of Cu, and 89-93wt% of MgAl₂O₄.

A preparation method of the above-mentioned reductive amination catalyst includes the following steps:
S11, adding a certain amount of spherical γ-Al₂O₃ and magnesium oxide particles into a mortar and mixing them evenly, grinding the obtained mixture, and screening to obtain a mixture of 100-200 meshes;
S12, transferring the mixture into a crucible, drying at 100-120°C for 20h, and then carrying out calcination at 1000-1100°C for 20h to obtain white powder;
S13, after cooling, processing for molding to obtain a granular MgAl₂O₄ spherical carrier with a radius of 3-5mm;
S14, adding copper nitrate, nickel nitrate and palladium nitrate into deionized water according to a formula ratio to prepare a metal salt solution;
S15, immersing the carrier obtained in S13 into the metal salt solution obtained in S14, adding a small amount of hydrochloric acid and monoethanolamine at the same time, heating and stirring, drying after reaching a full adsorption equilibrium, and carrying out calcination in a muffle furnace at 360-420°C for 4-8h; and
S16, after cooling, reducing in a hydrogen atmosphere to obtain the catalyst.

In one embodiment, the method includes the following steps:
S11, adding a certain amount of spherical γ-Al₂O₃ and magnesium oxide particles into a mortar and mixing them evenly, grinding the obtained mixture, and screening to obtain a mixture of 100-200 meshes;
S12, transferring the mixture into a crucible, drying at 100°C for 20h, and then carrying out calcination at 1000-1100°C for 20h to obtain white powder;
S13, after cooling, processing for molding to obtain a granular MgAl₂O₄ spherical carrier with a radius of 3-5mm;
S14, adding copper nitrate, nickel nitrate and palladium nitrate into deionized water according to a formula ratio to prepare a metal salt solution;
S15, immersing the carrier obtained in S13 into the metal salt solution obtained in S14, adding a small amount of hydrochloric acid and monoethanolamine at the same time, heating and stirring, drying after reaching a full adsorption equilibrium, and carrying out calcination in a muffle furnace at 360°C for 4h; and
S16, after cooling, reducing in a hydrogen atmosphere to obtain the catalyst.

Compared with the prior art, the present disclosure has the following beneficial effects.

The catalyst for amination is prepared by using the γ-Al₂O₃ modified by MgO as the carrier, which can better adapt to the high temperature and high pressure reaction conditions required for low-carbon alkane dehydrogenation. The active centers of the MgAl₂O₄ carrier are mainly formed in pores. Due to its suitable pore structure, it is difficult for carbon-deposited precursors to form in the pores, resulting in better stability of the catalyst. The acid sites of the MgAl₂O₄ carrier can weaken the adsorption of polyether on the catalyst so as to improve the selectivity of the catalyst. On the other hand, the carrier is good in thermal stability, which is conducive to dehydrogenation catalysis. The catalyst has advantage that in presence of the catalyst, the activity or selectivity of the catalyst is suitable for oligomeric oxypropylene ether. The Raw materials and catalyst facilitate the preparation of low-color-value polyether amine (color number≤10).

The present disclosure will be further described in detail below in conjunction with the accompanying drawings and specific embodiments.

### DETAILED DESCRIPTION OF THE EMBODIMENTS

### Example 1:

This example provides a method for preparing polyether amine by amination of polyether polyols, including the following steps:
The polyether polyols were subjected to a hydroamination reaction in presence of a reductive amination catalyst to prepare polyether amine, and a continuous fixed bed process was used for evaluation.

The specific method was as follows: the catalyst was reduced at 200°C for 15h in a hydrogen stream (under normal pressure) before use; the interior of a reactor was naturally cooled to 150°C and pressurized to 17.0MPa; after the system was stabilized, a liquid stream with a molar ratio of NH₃/PPG-230=15 was pumped into the reactor through a pump, and hydrogen was introduced in an amount of 1 time of the molar amount of PPG-230; and after a period of reaction, a polyether amine product was obtained by filtration and vacuum distillation.

The reductive amination catalyst includes an MgAl₂O₄ carrier, and Ni, Pd and Cu active components loaded thereon.

### Example 2:

This example provides the preparation method of the reductive amination catalyst used in Example 1:
Based on the weight of the catalyst, the content of Ni was 8wt%, the content of Pd was 1.0wt%, and the content of Cu was 0.25wt%. The preparation method of the catalyst was as follows: sufficient aqueous solutions of Ni(NO₃)₃·6H₂O, Pd(NO₃)₂·2H₂O, and Cu(NO₃)₂·3H₂O were added into 100g of an MgAl₂O₄ carrier, the obtained mixture was dried at 110°C for 6h after adsorption equilibrium, and then calcination was carried out for 11h at 450°C in the air to obtain a product recorded as a catalyst CAT-1.

The preparation method of a catalyst with Al₂O₃ as a carrier was as follows: based on the weight of the catalyst, the content of Ni was 8wt%, the content of Pd was 1.0wt%, and the content of Cu was 0.25wt%. The preparation method of the catalyst was as follows: sufficient aqueous solutions of Ni(NO₃)₃·6H₂O, Pd(NO₃)₂·2H₂O, and Cu(NO₃)₂·3H₂O were added into 100g of an Al₂O₃ carrier, the obtained mixture was dried at 110°C for 6h after adsorption equilibrium, and then calcination was carried out for 11h at 450°C in the air; copper nitrate, nickel nitrate and palladium nitrate were added into deionized water according to a formula ratio to prepare a metal salt solution; the Al₂O₃ carrier was immersed into the metal salt solution; the obtained mixture was heated and stirred at 60-80°C, and then dried after reaching a full adsorption equilibrium; calcination was carried out in a muffle furnace at 360°C for 4h; and after cooling, the product was reduced in a hydrogen atmosphere to obtain the catalyst recorded as a catalyst CAT-2.

When CAT-1 and CAT-2 are adopted, the reaction conversion rates, average amination rates (obtained after CAT-2 is used for 24 times and CAT-1 is used for 45 times), primary amine selectivity, average destruction rates and other properties are shown in Table 1. The reaction conversion rates, average amination rates, primary amine selectivity and average destruction rates involved in Table 1 are all average values. Taking the reaction conversion rate as an example, the reaction conversion rate was calculated by dividing the sum of the reaction conversion rates of all tests by the number of the tests, where CAT-2 was used for 24 times and CAT-1 was used for 45 times. After chemical analysis, the Pt-Co color number of a polyether amine product is 3 to 5. The catalyst was continuously operated for 2000h, and the sampling analysis showed that the key indicators such as color, amination rate and primary amine selectivity did not change. Conversion rate%=(1-polyether amount/total polyether amount)×100%, selectivity%=(primary amine value/total amine value)×100%, amination rate=(total amine value/polyether hydroxyl value)×100%. The end of test life is based on the amination rate lower than 92% for three consecutive times, and catalyst lifetime n (times)=test times-3. Catalyst destruction rate=(catalyst reduction amount/catalyst input amount)×100%.

A high-pressure reactor was used as a reaction vessel to carry out a reductive amination reaction with polyether polyols, liquid ammonia and hydrogen as starting materials. The performance of the catalyst was preliminarily evaluated under the following conditions: the adding amount of the catalyst was 60g, the adding amount of the polyether polyols was 200g, the adding amount of the liquid ammonia was 150g, the initial hydrogen pressure was 2.5Mpa, the reaction temperature was 165°C, and the holding time was 5h.

**Table 1 Comparison of performance of catalysts loaded on different carriers**

| Type of catalyst | Service life (times) | Average amination rate % | Primary amine selectivity % | Average destruction rate % |
|---|---|---|---|---|
| CAT-2 | 24 | 97.7 | 97.5 | 0.26 |
| CAT-1 | 45 | 98.9 | 99.0 | 0.11 |

Conclusion: The catalyst prepared by the MgAl₂O₄ carrier used in the present application is longer in service life, higher in average amination rate and primary amine selectivity, and lower in destruction rate compared with the catalyst using alumina as the carrier, which indicates that the catalyst prepared with the MgAl2O4 carrier is less prone to damage in a system and thus has a longer service life, and its selectivity and activity are better than that prepared with the alumina as the carrier.

### Example 3:

This example provides the preparation method of the reductive amination catalyst used in Example 1, which includes the following steps:
S11, a certain amount of spherical γ-Al₂O₃ and magnesium oxide particles were added into a mortar and then mixed evenly, and the obtained mixture was ground and screened to obtain a mixture of 100-200 meshes;
S12, the mixture was transferred into a crucible and dried at 100°C for 20h, and then calcination was carried out at 1000-1100°C for 20h to obtain white powder;
S13, after cooling, the produced was processed for molding to obtain a granular MgAl₂O₄ spherical carrier with a radius of 3-5mm;
S14, copper nitrate, nickel nitrate and palladium nitrate were added into deionized water according to a formula ratio to prepare a metal salt solution;
S15, the carrier obtained in S13 was immersed into the metal salt solution obtained in S14, and a small amount of hydrochloric acid and monoethanolamine were added at the same time; the obtained mixture was heated and stirred, and then dried after reaching a full adsorption equilibrium; calcination was carried out in a muffle furnace at 360°C for 4h; and
S16, after cooling, the product was reduced in a hydrogen atmosphere to obtain the catalyst.

The foregoing embodiments are only preferred embodiments of the present disclosure, and are not intended to limit the scope of protection of the present disclosure. Any non-substantive changes and substitutions made by those skilled in the art on the basis of the present disclosure shall fall within the scope of protection claimed by the present disclosure.

## Claims

1. A reductive amination catalyst for preparation of polyether amine, wherein the reductive amination catalyst comprises an MgAl₂O₄ carrier, and Ni, Pd and Cu active components loaded thereon.

2. The reductive amination catalyst according to claim 1, wherein the reductive amination catalyst is prepared from the following components by weight percent: 2-15wt% of Ni, 0.1-2wt% of Pd, 0.05-1wt% of Cu, and 84-95wt% of MgAl₂O₄.

3. The reductive amination catalyst according to claim 2, wherein the reductive amination catalyst is prepared from the following components by weight percent: 5-10wt% of Ni, 0.5-1.5wt% of Pd, 0.1-0.5wt% of Cu, and 89-93wt% of MgAl₂O₄.
